# EUROPÄISCHE PATENTANMELDUNG

(11) **EP 2 299 235 A1**
(43) Veröffentlichungstag der Anmeldung: **23.03.2011**
(21) Anmeldenummer: 09011730.0
(22) Anmeldetag: 14.09.2009
(51) Int. Cl.: G01B 11/16, G02B 6/26, G02B 23/24

(54) **Signaleinrichtung zur Messung eines Abstandes**

(71) Anmelder: SIEMENS AKTIENGESELLSCHAFT, 80333 München (DE)
(72) Erfinder: Tidona, Fausto, 40699 Erkrath (DE)

(57) **Zusammenfassung**

Die Erfindung betrifft eine Signaleinrichtung (1) zur Messung eines Abstandes in einer Strömungsmaschine, insbesondere Dampfturbine, wobei um einen optischen Lichtwellenleiter (4) ein metallischer Grundkörper (3) sowie eine als Hülse ausgebildete Schutzkappe (6) aus Wolfram und einem Schutzglas (10) aus Diamant, Saphir oder Rubin auf der Schutzkappe (6) angeordnet ist.

## Beschreibung

Die Erfindung betrifft eine Signaleinrichtung zur Messung eines Abstandes.

Für verschiedene Messungen in Strömungsmaschinen, wie beispielsweise in Dampfturbinen, werden Sensoren eingesetzt, die erhöhten Anforderungen gerecht werden müssen. So müssen beispielsweise die Sensoren hohe Drücke von bis zu 350 bar und hohe Temperaturen von bis zu 800° C standhalten. Solch hohe thermische Belastungen erfordern eine gezielte Auswahl an Materialien und eine gezielte Konstruktion der Sensoren. Mit konventionell ausgebildeten optischen Sensoren wird über einen optischen Lichtwellenleiter ein Lichtsignal auf eine Referenzfläche ausgestrahlt und der reflektierte Lichtanteil empfangen und ausgewertet. Aus den erhaltenen Messdaten kann auf den Abstand zwischen der Referenzfläche und dem Sensor zurückgeschlossen werden. Mit den so gewonnenen Abstandsgrößen können in Dampfturbinen die Abstände zu rotierenden Bauteilen ermittelt werden. Sobald ein kritischer Abstand unterschritten wird, wird dies durch die Signaleinrichtung ermittelt und weitere Maßnahmen eingeleitet.

Des Weiteren müssen die Sensoren neben der Temperatur und dem Druck ebenso aggressiven Medien standhalten. Es ist bekannt, metallisierte Glasfasern in metallische Grundkörper anzuordnen und über O-Ringe an eine Vorrichtung anzuordnen. Solche Sensoreinrichtungen sind allerdings lediglich für Temperaturen von unter 400° C einsetzbar. Wünschenswert wäre es eine Signaleinrichtung zu haben, die für hohe Temperaturen und hohe Drücke sowie im Einsatz mit aggressiven Medien geeignet ist. An dieser Stelle setzt die Erfindung an, deren Aufgabe es ist, eine Signaleinrichtung zur Messung eines Abstandes anzugeben, die bei hohen Drücken und hohen Temperaturen eingesetzt werden kann.

Die Aufgabe wird gelöst durch eine Signaleinrichtung zur Messung eines Abstandes, umfassend einen optischen Lichtwellenleiter und einen um den optischen Wellenleiter angeordneten metallischen Grundkörper sowie einer als Hülse ausgebildeten Schutzkappe, die um den optischen Lichtwellenleiter angeordnet ist, sowie einem Schutzglas, das stirnseitig auf der Schutzkappe angeordnet ist.

Ein Merkmal der Erfindung ist es, dass neben einem optischen Wellenleiter ein metallischer Grundkörper um den optischen Wellenleiter angeordnet wird und eine Schutzkappe über den metallischen Grundkörper um den optischen Lichtwellenleiter angeordnet ist sowie ein Schutzglas vor den Ausgang des optischen Lichtwellenleiters angeordnet wird, um den Temperaturen und den Drücken standzuhalten.

Vorteilhafte Weiterbildungen sind in den Unteransprüchen angegeben.

Eine vorteilhafte Weiterbildung entsteht dadurch, indem die als Hülse ausgebildete Schutzkappe teilweise um den metallischen Grundkörper angeordnet ist. Dazu wird der metallische Grundkörper an der Berührungsstelle zur als Hülse ausgebildeten Schutzkappe mit einem geringeren Radius ausgeführt. Die Schutzkappe wird an dieser Stelle mit einem entsprechend angepassten Innenradius ausgeführt, so dass die Schutzkappe über den metallischen Grundkörper gestülpt werden kann. Durch diese Maßnahme ist eine schnelle und kostengünstige Möglichkeit gegeben, den metallischen Grundkörper mit der als Hülse ausgebildeten Schutzkappe zu verbinden.

Eine weitere vorteilhafte Weiterbildung entsteht dadurch, indem man den metallischen Grundkörper mit der Schutzkappe über eine Laser- oder Elektronenstrahl-Verschweißung miteinander verbindet. Durch eine solche Schweißung ist eine stabile und dichte Verbindung zwischen der Schutzkappe und dem metallischen Grundkörper möglich.

In einer weiteren vorteilhaften Weiterbildung wird ein Schutzglas auf die Schutzkappe angeordnet und über eine Hartlötung miteinander verbunden. Das Schutzglas wird dabei am Ausgang des optischen Wellenleiters angeordnet und ist selbstverständlich für die optischen Signale, die aus dem optischen Wellenleiter kommen, durchlässig. Da das Schutzglas in direktem Kontakt mit den aggressiven Medien im Messraum steht, sind erhöhte Anforderungen an dieses Schutzglas gestellt. Mit der Hartlötung ist jedenfalls eine sehr gute Verbindung zwischen dem Schutzglas und der Schutzkappe gegeben. Ebenso ist durch diese Hartlötung die Dichtigkeit zwischen dem Schutzglas und der Schutzkappe relativ hoch.

In einer weiteren vorteilhaften Weiterbildung ist die Schutzkappe aus dem Material Wolfram ausgebildet. Der besondere Vorteil bei der Auswahl des Werkstoffes bzw. Materials Wolfram liegt darin, dass Wolfram einen vergleichsweise hohen Schmelzpunkt von 3422° C aufweist und damit einen um etwa 1800° C höheren Schmelzpunkt aufweist als beispielsweise Stahl. Ein solch hoher Schmelzpunkt führt zu einer hohen Formstabilität sowie zu geringen Fließ- und Kriecheigenschaften. Darüber hinaus besitzt Wolfram eine zu dem Schutzglas angepasste und vergleichbare Wärmedehnung, was dazu führt, dass das Schutzglas vor Beschädigungen geschützt wird.

In einer weiteren vorteilhaften Weiterbildung wird das Material Diamant für das Schutzglas verwendet. In alternativen Ausführungsformen kann als Material für das Schutzglas die Werkstoffe Saphir oder Rubin verwendet werden. Der besondere Vorteil bei der Auswahl von Diamant oder Saphir in Verbindung mit der aus Wolfram ausgebildeten Schutzkappe, liegt darin, dass die Temperaturdehnungen der Werkstoffe Diamant, Saphir und Wolfram vergleichsweise ähnlich sind, was bei den hohen zu erwartenden Temperaturschwankungen in einer Dampfturbine berücksichtigt wird. Dadurch ergeben sich kaum Wärmespannungen, wodurch die aus Wolfram ausgebildete Schutzkappe direkt fest mit dem Schutzglas verbunden werden kann. Somit werden Risse infolge von Wärmespannungen im spröden Schutzglas vermieden.

In vorteilhaften Weiterbildungen werden spezielle Verbindungstechniken verwendet, die zum einen den metallischen Grundkörper mit der aus Wolfram ausgebildeten Schutzkappe miteinander verbindet und wobei die Wolframschutzkappe mit dem Schutzglas verbunden wird. Als Schweißverfahren zum Verschweißen der Schutzkappe aus Wolfram und dem metallischen Grundkörper eignen sich Laser- oder Elektronenstrahlschweißverfahren. Solch ein Schweißverfahren zeichnet sich durch einen geringen Wärmeeintrag aus und führt dazu, dass das um die Schweißnaht umliegende Gefügte kaum beeinflusst wird.

Die Erfindung wird anhand eines Ausführungsbeispiels näher erläutert.

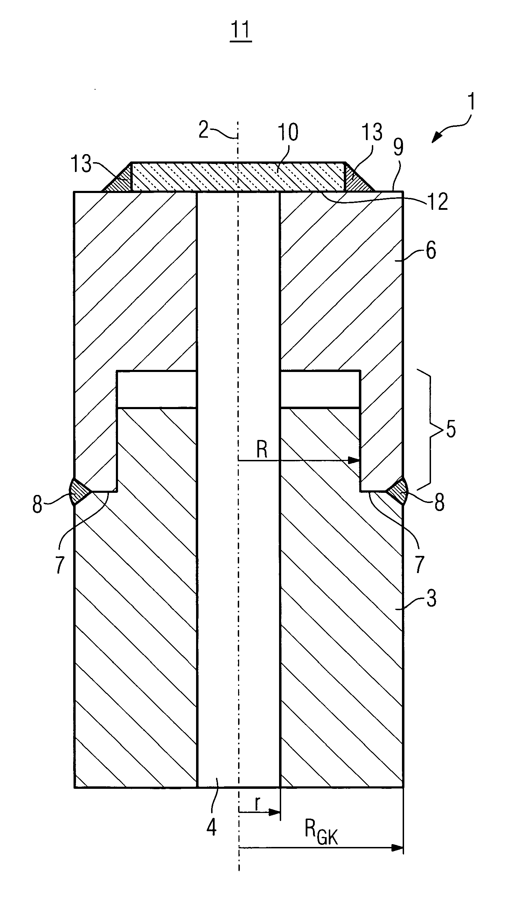

Die FIG 1 zeigt einen Schnitt durch eine Signaleinrichtung.

Die FIG 1 zeigt eine Querschnittansicht einer Signaleinrichtung 1. Die Signaleinrichtung ist im Wesentlichen um eine Symmetrieachse 2 rotationssymmetrisch ausgebildet und umfasst einen metallischen Grundkörper 3, der um einen optischen Lichtwellenleiter 4 angeordnet ist. Der optische Lichtwellenleiter 4 ist im Wesentlichen länglich ausgebildet und weist einen Radius r auf. Der metallische Grundkörper weist ein als Bohrung ausgeführtes Loch mit einem Radius r auf, so dass der Lichtwellenleiter im metallischen Grundkörper 3 angeordnet werden kann. Der metallische Grundkörper 3 weist an einer Verbindungsstelle 5 einen äußeren Radius R auf, der geringer ist als der Umfangsradius R_{GK} des metallischen Grundkörpers 3. In Richtung der Symmetrieachse 2 ist eine Schutzkappe 6 aus Wolfram angeordnet, das ebenfalls im Wesentlichen einen als Bohrung ausgeführtes Loch mit einem Innenradius von r aufweist, so dass der optische Lichtwellenleiter 4 durch die Schutzkappe 6 geführt werden kann. Die Schutzkappe 6 ist hierbei als Hülse ausgebildet. An der Verbindungsstelle 5 weist die Schutzkappe 6 einen Innenradius mit einem Betrag der dem äußeren Radius R entspricht, so dass die Schutzkappe 6 über den metallischen Grundkörper 3 an der Verbindungsstelle 5 gestülpt werden kann. Der metallische Grundkörper 3 und die Schutzkappe 6 aus Wolfram werden an einer Kontaktstelle 7 mit einer Schweißung 8 miteinander fest verbunden. Diese Schweißung kann ein Laser- oder ein Elektronenstrahl-Schweißverfahren sein.

An einem stirnseitigen Ende 9 der Wolframschutzkappe 6 ist ein Schutzglas 10 aus dem Material Diamant, Saphir oder Rubin angeordnet. Der am stirnseitigen Ende 9 austretende Lichtstrahl aus dem optischen Lichtwellenleiter 4 wird in einen Messraum 11 gesendet und an einem nicht näher dargestellten Messobjekt, wie z.B. einer Turbinenschaufel reflektiert und wieder erfasst. Das Schutzglas 10 liegt dabei an einer zweiten Kontaktstelle 12 auf der Schutzkappe 6 auf. Durch eine zweite Schweißung 13 wird eine formschlüssige Verbindung zwischen dem Schutzglas 10 und der Schutzkappe 6 erreicht. Diese zweite Schweißung kann ein Hartverlöt-Schweißverfahren oder ähnliches sein.

Durch solch eine erfindungsgemäße Signaleinrichtung 1 ist eine Radialspaltmessung in einer Dampfturbine, insbesondere Hochdruckdampfturbine im Hochdruckdampf möglich, wobei aggressive Medien durch das Schutzglas 10 standhalten. Folgende weitere Anwendungen der Signaleinrichtung sind möglich: Particle Image Velocimetry in aggressiven Medien und unter Temperatur, Laser-Doppler-Anemometrie in aggressiven Medien und unter Temperatur, Surface Pattern Image Velocimetry zur Untersuchung von Geschwindigkeitsfelder von aggressiven Medien unter Temperatur, Photonenkorrelationsspektroskopie zur Messung von Teilchengrößen und Größenverteilung von Fremdpartikeln oder mehrphasigen Strömungen in aggressiven Medien unter Temperatur, Laser Speckle Shearing Interferometrie zur optischen Spannungs- und Dehnungsmessung und Schwingungsmessung in aggressiven Medien unter Temperatur, Bestimmung der Dielektrizitätskonstante, Brechzahl, Lichtabsorption oder Fluoreszenz von aggressiven Medien unter Temperatur, Explosimeter mit Infrarot-Messverfahren in aggressiven Medien und unter hoher Temperatur, Messung der Trübung in aggressiven Medien und unter hoher Temperatur, Interferometrie zur Schwingungs- oder Abstandsmessung in aggressiven Medien und unter hoher Temperatur.

## Patentansprüche

1. Signaleinrichtung (1) zur Messung eines Abstandes, umfassend einen optischen Lichtwellenleiter (4) und einen um den optischen Lichtwellenleiter (4) angeordneten metallischen Grundkörper (3) sowie eine als Hülse ausgebildete Schutzkappe (6), die um den optischen Lichtwellenleiter (4) angeordnet ist sowie einem Schutzglas (10), das stirnseitig (9) auf der Schutzkappe (6) angeordnet ist.

2. Signaleinrichtung (1) nach Anspruch 1,
wobei die als Hülse ausgebildete Schutzkappe (6) teilweise um den metallischen Grundkörper (3) angeordnet ist.

3. Signaleinrichtung (1) nach Anspruch 1 oder 2,
wobei die Schutzkappe (6) mit dem metallischen Grundkörper (3) über eine Laser- oder Elektronenstrahlverschweißung verbunden ist.

4. Signaleinrichtung (1) nach einem der vorhergehenden Ansprüche,
wobei das Schutzglas (10) mit der Schutzkappe (6) über eine Hartlötung miteinander verbunden ist.

5. Signaleinrichtung (1) nach einem der vorhergehenden Ansprüche,
wobei die Schutzkappe (6) aus dem Material Wolfram ausgebildet ist.

6. Signaleinrichtung (1) nach einem der vorhergehenden Ansprüche,
wobei das Schutzglas (10) aus dem Material Diamant ausgebildet ist.

7. Signaleinrichtung (1) nach einem der Ansprüche 1 bis 5, wobei das Schutzglas (10) aus dem Material Saphir ausgebildet ist.

8. Signaleinrichtung (1) nach einem der Ansprüche 1 bis 5, wobei das Schutzglas (10) aus dem Material Rubin ausgebildet ist.
